# EUROPEAN PATENT APPLICATION

(11) **EP 3 841 890 A1**
(43) Date of publication of application: **30.06.2021**
(21) Application number: 20809175.1
(22) Date of filing: 24.01.2020
(51) Int. Cl.: A23L 5/00, A23L 33/00, A23G 3/34

(54) **INSOLUBLE DIETARY FIBER-CONTAINING SOLID COMPOSITION AND METHOD FOR MANUFACTURING SAME**

(30) Priority: 22.05.2019 JP 2019095751
(71) Applicant: Mizkan Holdings Co., Ltd., Handa-shi, Aichi 475-8585 (JP)
(72) Inventor: TOMITA, Takahiko, Handa-shi, Aichi 475-8585 (JP); NISHIOKA, Daisuke, Handa-shi, Aichi 475-8585 (JP)
(74) Representative: Mewburn Ellis LLP
(86) International application number: PCT/JP2020/002511
(87) International publication number: WO 2020/235138

(57) **Abstract**

Provided is a solid composition which is not too hard and excellent in edibility and to which a dry and good crispy texture and a favorable raw material-derived flavor are imparted regardless of a high content of insoluble dietary fiber.

A solid composition comprising a powder of an edible part and/or an insoluble dietary fiber localized site of one or more selected from the group consisting of dried vegetables, dried grains, dried pulses, and dried fruits, wherein:
(1) the solid composition contains 3 mass% or more of protein;
(2) the solid composition contains 3 mass% or more of insoluble dietary fiber;
(3) a moisture content on wet basis is 11 mass% or less;
(4) a drying rate (105°C, 5 minutes) is 0.02 g/s·m² or more; and
(5) a 50% integrated diameter of particles in an aqueous dispersion of the solid composition after ultrasonication is more than 5 µm and 600 µm or less.

## Description

### Technical Field

The present invention relates to a solid composition containing insoluble dietary fiber and a method for manufacturing the solid composition.

### Background Art

While some people prefer a soft texture in baked confections such as biscuits, cookies, crackers, and calorie bars, many people seem to avoid it because they consider it as a humid texture. That is, it is preferable that a person having a taste such as the latter be provided with a texture having a dry and good crispness while being excellent in eating property without being too hard.

However, if one tries to impart a dry crisp feeling to these baked confections, the conventional method was to adjust the baking degree of the dough stronger and to lower the water content after baking. The baked confections prepared by such a conventional method are not only too hard to bite, but also have lost a favorable flavor inherent in the raw material due to the strong baking.

Meanwhile, the current trend of imparting health functions to foods is true of development of a food such as baked confections, including a direction containing health-functional food such as dietary fiber to promote the ingestion claiming the health function.

However, according to Patent Literature 1, when whole grain flour rich in insoluble dietary fiber is used, the product provides a hard texture and poor mouth melting. In addition, it is pointed out that there are also manufacturing limitations, such as the need for close control of firing conditions in order to keep the appearance bright, because burning due to firing is liable to occur. Patent Literature 2 points out that many of the dietary fibers are insoluble in water, and in particular, if a large amount of dietary fiber insoluble in water is blended in biscuits, gluten is not formed well, and it results in only a baked confection having poor mechanical suitability and texture. For this reason, the former has been limited to the development of a technology for providing baked confection which has a firm texture, a soft texture, and can be chewed with good cleavage. In the latter, it is said that the above problem is solved by blending water-soluble dietary fiber. Patent Literature 3 describes provision of a baked confection which is excellent in flavor and is also excellent in productivity although it contains abundantly insoluble dietary fiber. While Patent Literature 3 describes the effect of the baked confection includes excellent flavor, excellent workability in the preparation of the baked confection due to suppressed stickiness of the dough prior to baking, and excellent moldability due to good connection of the dough, nothing is described or evaluated on imparting of a texture having a dry and good crispness and a favorable flavor from the raw material.

That is, a technique has not been developed for providing a solid composition which is not too hard and excellent in edibility and to which a dry and good crispy texture and a favorable flavor from the raw material are imparted regardless of a high content of insoluble dietary fiber.

### Citations

### Patent Literatures

- [Patent Literature 1]: JP 2014-140363
- [Patent Literature 2]: JP hei 10-14482
- [Patent Literature 3]: JP 2018-153113

### Summary of the Invention

### Problem

Accordingly, the present invention aims to provide a solid composition excellent in eating property having a good crispy texture and a well-balanced flavor derived from a preferable raw material even though it contains a large amount of insoluble dietary fiber.

### Solution to Problem

As a result of energetic studies in view of the above circumstances, the inventors of the present the present invention have focused on the effect of an edible plant containing a large amount of insoluble dietary fiber, which is not in the prior art, and have newly found that the above problem can be simply solved at the same time. Then, the authors of the present invention have completed the following inventions by further intensive research based on the above findings.
[1] A solid composition comprising a powder of an edible part and/or an insoluble dietary fiber localized site of one or more selected from the group consisting of dried vegetables, dried grains, dried pulses, and dried fruits, wherein the solid composition satisfies the following characteristics (1) to (5):
   (1) the solid composition contains 3 mass% or more of protein;
   (2) the solid composition contains 3 mass% or more of insoluble dietary fiber;
   (3) a moisture content on wet basis is 11 mass% or less;
   (4) a drying rate (105°C, 5 minutes) is 0.02 g/s·m² or more; and
   (5) a 50% integrated diameter of particles in an aqueous dispersion of the solid composition after ultrasonication is more than 5 µm and 600 µm or less.
[2] The solid composition according to [1], comprising an edible part and an insoluble dietary fiber localized site of one or more selected from the group consisting of dried vegetables, dried grains, dried pulses, and dried fruits.
[3] The solid composition according to [1] or [2], wherein the maximum particle size in the aqueous dispersion of the solid composition in a non-ultrasonicated state is 300 µm or more.
[4] The solid composition according to any one of [1] to [3], comprising 5 mass% or more of the edible part and/or the insoluble dietary fiber localized site of the dried pulses.
[5] The solid composition according to any one of [1] to [4], comprising a powder of a seed coat part of the dried pulses.
[6] The solid composition according to any one of [1] to [5], further having a total fat/oil content of less than 60 mass%.
[7] The solid composition according to any one of [1] to [6], wherein a content of an edible part and/or an insoluble dietary fiber localized site of one or more selected from the group consisting of dried vegetables, dried grains, and dried fruits is 10 mass% or more in terms of dry mass.
[8] The solid composition according to any one of [1] to [7], further comprising a solid fat/oil.
[9] The solid composition according to any one of [1] to [8], comprising 1 mass% or more and 90 mass% or less of the powder of insoluble dietary fiber localized site of one or more selected from the group consisting of dried vegetables, dried grains, dried pulses, and dried fruits in terms of dry mass, with respect to the total solid composition.
[10] The solid composition according to any one of [1] to [9], wherein the edible part and the insoluble dietary fiber localized site of one or more selected from the group consisting of dried vegetables, dried grains, dried pulses, and dried fruits are derived from the same kind of plants.
[11] The solid composition according to any one of [1] to [10], wherein the edible part and the insoluble dietary fiber localized site of one or more selected from the group consisting of dried vegetables, dried grains, dried pulses, and dried fruits are derived from the same individual.
[12] The solid composition according to any one of [1] to [11], wherein the dried vegetables are one or more selected from the group consisting of pumpkin, carrot, cabbage, and table beet.
[13] The solid composition according to any one of [1] to [11], comprising no gluten.
[14] The solid composition according to any one of [1] to [11], wherein the dried grains are corn.
[15] The solid composition according to any one of [1] to [11], wherein the dried fruits are citrus fruits.
[16] The solid composition according to any one of [1] to [15], wherein the solid composition is for human ingestion.
[17] The solid composition according to any one of [1] to [16], comprising no animal foodstuff.
[18] The solid composition according to any one of [1] to [17], wherein the solid composition is a baked confection.
[19] A method for manufacturing a solid composition comprising a powder of an edible part and/or an insoluble dietary fiber localized site of one or more selected from the group consisting of dried vegetables, dried grains, dried pulses, and dried fruits, the method comprising the following steps (i) and (ii):
   (i) a step of adjusting a dough composition comprising a powder of an edible part and/or an insoluble dietary fiber localized site of one or more selected from the group consisting of dried vegetables, dried grains, dried pulses, and dried fruits so that a content of the insoluble dietary fiber is 5 mass% or more, a 50% integrated diameter of particles in an aqueous dispersion of the dough composition after ultrasonication is more than 5 µm and 600 µm or less, and a moisture content on wet basis is 15 mass% or more; and
   (ii) a step of subjecting the dough composition of (i) to heat treatment to reduce a moisture content on wet basis by 4 mass% or more for solidification.
[20] The method for manufacturing a solid composition according to [19], wherein, in the step (i), a drying rate of the dough composition is adjusted to 0.20 g/s·m² (105°C, 5 minutes) or more.
[21] The method for manufacturing a solid composition according to c[19] or [20], wherein, in the step (i), the dough composition comprises the edible part and the insoluble dietary fiber localized site of one or more selected from the group consisting of dried vegetables, dried grains, dried pulses, and dried fruits.
[22] The method for manufacturing a solid composition according to any one of [19] to [21], wherein, in the step (i), the dough composition comprises a powder of a seed coat part of dried pulses.
[23] The method for manufacturing a solid composition according to any one of [19] to [22], wherein, in the step (ii), heating is performed until the drying rate reaches less than 0.20 g/s·m² (105°C, 5 minutes).
[24] The method for manufacturing a solid composition according to any one of [19] t0 [23], wherein, in the step (ii), heating is performed until the drying rate reaches 0.02 g/s·m² (105°C, 5 minutes) or more.

### Advantageous Effect of the Invention

The present invention provides a solid composition which is not too hard and excellent in edibility and to which a dry and good crispy texture and a favorable raw material-derived flavor are imparted regardless of a high content of insoluble dietary fiber.

### Description of Embodiments

The present invention relates to a solid composition containing a powder of an edible part and/or an insoluble dietary fiber localized site of one or more selected from the group consisting of dried vegetables, dried grains, dried pulses, and dried fruits, wherein the solid composition satisfies the following characteristics (1) to (5):
(1) the solid composition contains 3 mass% or more of protein;
(2) the solid composition contains 3 mass% or more of insoluble dietary fiber;
(3) a moisture content on wet basis is 11 mass% or less;
(4) a drying rate (105°C, 5 minutes) is 0.02 g/s·m² or more; and
(5) a 50% integrated diameter of particles in an aqueous dispersion of the solid composition after ultrasonication is more than 5 µm and 600 µm or less.

### [Solid composition]

In the present invention, the solid composition refers to a solid food composition and specifically refers to a composition in which a dough containing a powder of an edible part and/or an insoluble dietary fiber localized site (in particular, inedible part) of one or more selected from the group consisting of dried vegetables, dried grains, dried pulses, and dried fruits (hereinafter, may be referred to as the dried foodstuff) which are edible plants is solidified by evaporating the moisture by heat treatment. More specifically, the solid composition refers to a baked confection, and further specifically refers to a biscuit, cookie, cracker, calorie bar (stick, bar), granola, hardtack, pretzel, pie, cut bread, shortbread, and the like. The shape and size are not particularly limited.

Drying properties and expansion at the time of heat treatment may be suppressed by making pores or forming irregularities on the dough before heat treatment. More specifically, the solid composition of the present invention may be an aspect containing no water vapor-expanded food which is manufactured by the swelling of the moisture in a dough composition due to sudden pressure reduction of the pressurized dough composition, an aspect containing no expansion food whose volume increases four times or more before and after expansion, or an aspect containing no expansion food at all.

The conditions of the heat treatment are not limited in any way, and the heating method and heating conditions thereof may be appropriately selected without limitation as long as it is possible to modulate so that the moisture may be evaporated from the dough of the solid composition and the moisture content value on wet basis and the drying rate may be a certain value or less under the conditions and to obtain a desired texture and flavor. As for specific examples of the heating conditions, the heating time may usually be 10 minutes or more, and more preferably 20 minutes or more. The heating temperature may usually be 100°C or more, and more preferably 105°C or more. It is further preferred to comprise a step of heating at 200°C or more within 0.5 minutes or more and no more than 5 minutes, in a step of heating at 100°C or more.

The composition before solidifying by heat treatment is referred to as the dough composition, and the 50% integrated diameter of the particles in the aqueous dispersion of each composition remains unchanged between the dough composition before the heat treatment and the solid composition after the heat treatment.

### [Dried vegetables, dried grains, or dried fruits]

The solid composition of the present invention can contain one or more selected from the group consisting of dried vegetables, dried grains, and dried fruits. The content of the dried foodstuff in the solid composition is not particularly limited, but is preferably 10 mass% or more, further preferably 20 mass% or more, further preferably 30 mass% or more, further preferably 40 mass% or more, further preferably 50 mass% or more, further preferably 70 mass% or more, further preferably 90 mass% or more, and further preferably 100 mass%, in terms of dry mass. These may be appropriately selected or combined to modulate the protein content and the insoluble dietary fiber content.

Examples of the vegetables include, but are not limited to, Japanese radish, carrot, rutabaga, parsnip, turnip, black salsify, lotus root, beet (suitably table beet (beetroot): the breed which is improved to use the root of beet for food), arrowhead, eschalot, garlic, rakkyo, lily bulb, kale, onion, asparagus, udo, cabbage, lettuce, spinach, Chinese cabbage, turnip rape, komatsuna, bok choy, Chinese chive, Welsh onions, nozawana, Japanese butterbur, chard (fudanso, Swiss chard), mizuna, tomato, eggplant, pumpkin, green pepper, cucumber, Japanese ginger, cauliflower, broccoli, edible chrysanthemum, bitter melon, okra, artichoke, zucchini, sugar beet, tigernut, ginger, shiso, wasabi, paprika, herbs (watercress, coriander, water morning glory, celery, tarragon, chives, chervil, sage, thyme, laurel, parsley, mustard greens (karashina), mugwort, basil, oregano, rosemary, peppermint, savory, lemongrass, dill, wasabi leaf, Japanese pepper leaf, stevia), bracken, zenmai, and bamboo shoot. Among them, carrot, pumpkin, tomato, paprika, cabbage, beet (suitably table beet (beetroot)), onion, broccoli, asparagus, spinach, kale are preferred, and furthermore, carrot, pumpkin, cabbage, and beet (suitably table beet (beetroot)) are particularly preferred.

Examples of the grains include, but are not limited to, corn (in particular, sweetcorn is preferred), rice, common wheat, barley, sorghum, oat, triticale, rye, buckwheat, fonio, quinoa, Japanese barnyard millet, foxtail millet, proso millet, giant corn, sugar cane, and amaranth. Among them, corn (in particular, sweetcorn is preferred), giant corn, and the like are preferred.

Examples of the fruits include, but are not limited to, Chinese quince, Chinese white pear (white pear, Chinese pear), nashi pear, quince, medlar, juneberry, shipova, apple, American cherry (black cherry, dark cherry), apricot, Japanese apricot, cherry (sweet cherry), sour cherry, blackthorn, Japanese plum, peach, ginkgo, chestnuts, akebia, fig, persimmon, cassis (blackcurrant), bramble, kiwifruit (kiwi), gummy, mulberry (dodome), cranberry (American cranberry), cowberry (iwamomo, hamanashi, okamaringo), pomegranate, Hardy kiwi (shirakuchizuru, kokuwa), sea buckthorn (saji, hippophae, seaberries), gooseberry, jujube, Japanese bush cherry (koume, ikuri), haskap (honeyberry), bilberry, redcurrant, grape, blackberry, blueberry, pawpaw, matsubusa, raspberry, downy cherry, mandarin orange, kumquat, trifoliate orange, olive, loquat, red bayberry, monkfruit, tropical fruits (tropical fruits such as mango, mangosteen, papaya, cherimoya, atemoya, banana, durian, carambola, guava, pineapple, acerola, passion fruit, pitaya, lychee, and canistel), strawberry, water melon, melon, avocado, miracle fruit, orange, lemon, prune, yuzu, sudachi, grapefruit, bitter orange, and flat lemon. Among them, citrus fruits are preferred and specific examples thereof include orange, lemon, and yuzu.

### [Dried pulses]

The solid composition of the present invention can also contain dried pulses. The content of the dried pulses in the solid composition is not particularly limited, but is preferably 5 mass% or more, further preferably 10 mass% or more, further preferably 15 mass% or more, further preferably 20 mass% or more, further preferably 30 mass% or more, further preferably 40 mass% or more, further preferably 50 mass% or more, further preferably 60 mass% or more, further preferably 70 mass% or more, and further preferably 80 mass% or more, in terms of dry mass. On the other hand, the upper limit of the content of the dried pulses is preferably 100 mass% or less, and more preferably 90 mass% or less, in terms of dry mass, from the viewpoint of the taste.

Examples of the pulses include, but are not limited to, common bean, kidney bean, red common bean, white common bean, black bean, pinto bean, toramame, lima bean, scarlet runner bean, peas (e.g., yellow pea, white pea, green pea, marrowfat pea, and in particular, green pea which is an unripe seed obtained by harvesting the seed with pods in an unripe state and whose bean exhibits a green appearance), pigeon pea, mung bean, cow pea, adzuki bean, broad bean, soybean (in particular, green soybean), chickpea, Lens culinaris, hiramame, lentil, peanut, lupin bean, grass pea, locust bean (carob), petai bean, African locust bean, coffee bean, cocoa bean, and Mexican jumping bean. Some of the foodstuffs in which the edible part (e.g., green soybean and green pea) is handled as a vegetable can be determined from the state of the whole plant (e.g., soybean and pea) combined with the non-edible part (e.g., pod) whether the foodstuff belongs to beans. Among them, pea (in particular, green pea which is an unripe seed obtained by harvesting the seed with pods in an unripe state and whose bean exhibits a green appearance), soybean (in particular, green soybean which is an unripe seed obtained by harvesting the soybean with pods in an unripe state and whose bean exhibits a green appearance), broad bean, and the like are preferred.

Among the dried pulses, it is further preferred to contain a pulverized seed coat part (insoluble dietary fiber localized site) of the pulses having the seed coat part (such as soybeans and peas) because the solid composition may have a good flavor (flavor release). Each of the pulverized seed coat part of the dried pulses and the remaining part except for the seed coat part from the edible part (such as a cotyledon part) may be derived from different kinds of pulses, but is preferably derived from the same kind of pulses, and is further preferably derived from the same individual of pulses, from the viewpoint of uniformity of flavor. Each of the pulverized seed coat part and the remaining part except for the seed coat part from the edible part of the dried pulses may be separately shredded and used, the whole dried pulses having the seed coat part may be shredded and used, or other foodstuffs to be shredded (dried vegetables, dried grains, and dried fruits) and the seed coat part and/or the remaining part except for the seed coat part from the edible part of the dried pulses may be shredded together and used. In particular, it is preferred to contain the seed coat of peas.

In the present invention, the dried vegetables, dried grains, dried pulses, or dried fruits may be prepared by subjecting various edible plants described above to drying treatment. As the drying method, an arbitrary method which is generally used in the drying of foods can be used. Examples thereof include sun drying, shade drying, freeze drying, air drying (e.g., hot air drying, fluidized bed drying method, spray drying, drum drying, and low temperature drying), pressure drying, vacuum drying, microwave drying, and oil heat drying. Among them, a method involving air drying (e.g., hot air drying, fluidized bed drying method, spray drying, drum drying, or low temperature drying), or freeze drying is preferred in view of a small degree of change in color tone or flavor inherent in the foodstuff and controlling the non-food aroma (e.g., burnt odor). The dried foodstuff may be used as a raw material by preparing the dried foodstuff from the beginning as described above, or the dried foodstuff may be made by preparing a dough composition using an undried edible plant such as vegetables as a raw material and drying this dough composition. From the viewpoint of operability, it is preferred to use the dried foodstuff as a raw material.

### [Edible part and insoluble dietary fiber localized site of dried foodstuff]

The solid composition in the present invention preferably contains the powder of an edible part and/or an insoluble dietary fiber localized site (in particular, inedible part) of one or more selected from the group consisting of dried vegetables, dried grains, dried pulses, and dried fruits because the solid composition may have a good flavor (flavor release), and it is further preferred to contain the two together. The content of the insoluble dietary fiber localized site (in particular, the inedible part) of the dried foodstuff in the solid composition is not particularly limited, but is preferably 1 mass% or more and 90 mass% or less in terms of dry mass with respect to the total solid composition. This enables to modulate the content of the protein and other flavor components derived from the edible part in the solid composition, and to modulate the content of the insoluble dietary fiber contained in the insoluble dietary fiber localized site (in particular, the inedible part) in a large amount and the flavor component. From the viewpoint of its effect, the content of the dried vegetables or dried fruits is particularly preferably 10 mass% or more in terms of dry mass with respect to the total solid composition. When the solid composition of the present invention contains the inedible part of an edible plant, it is preferably for human ingestion.

The insoluble dietary fiber localized site in the present invention represents the site where the insoluble dietary fiber is localized in the whole foodstuff, specifically the site having an insoluble dietary fiber content proportion higher than that of the edible part in the foodstuff, and represents the site having an insoluble dietary fiber content proportion of more preferably 1.1 times or more, further preferably 1.2 times or more, further preferably 1.3 times or more, further preferably 1.4 times or more, further preferably 1.5 times or more, further preferably 1.6 times or more, further preferably 1.7 times or more, further preferably 1.8 times or more, further preferably 1.9 times or more, and most preferably 2.0 times or more higher than that of the edible part in a dry state.

The insoluble dietary fiber localized site preferably has an insoluble dietary fiber content proportion of more than 10 mass%, further preferably more than 11 mass%, further preferably more than 12 mass%, further preferably more than 13 mass%, further preferably more than 14 mass%, further preferably more than 15 mass%, further preferably more than 16 mass%, further preferably more than 17 mass%, further preferably more than 18 mass%, further preferably more than 19 mass%, and further preferably more than 20 mass% in terms of dry mass. In the foodstuff containing the insoluble dietary fiber which contains the insoluble dietary fiber localized site in the present invention, the lower limit of the proportion of the insoluble dietary fiber localized site with respect to the total mass of the whole foodstuff is preferably 3 mass% or more in a dry state. It is more preferably 5 mass% or more, and further preferably 9 mass% or more. On the other hand, the upper limit thereof is usually not limited, but may preferably be 70 mass% or less, more preferably 60 mass% or less, and further preferably 50 mass% or less. The insoluble dietary fiber localized site in the present invention may be a part of "the edible part" of the foodstuff described below (e.g., the seed coat part of vegetables, grains, pulses, or fruits; in particular, the seed coat part of pulses) or may be "the inedible part", but the insoluble dietary fiber localized site is preferably "the inedible part". Specific examples thereof are shown in Table 1.

In the present invention, "the inedible part" of the edible plant (dried vegetables, dried grains, dried pulses, or dried fruits) represents the part of the edible plant which is usually not suitable for drinking and eating, or the part which is to be disposed of in usual dietary habits, and the "edible part" represents the part excluding the disposal part (inedible part) from the whole edible plant. Particularly in the case of the edible plant containing a thick dietary fiber layer, a trichome, or the like, the part containing the thick dietary fiber layer, the trichome, or the like conventionally has many parts that are not available for eating and to be disposed of due to bad ingestion and bad compatibility with other foods. In the present invention, the inedible part containing such a thick dietary fiber layer, a trichome, or the like can be suitably used.

In the edible plant (dried vegetables, dried grains, dried pulses, or dried fruits) used in the present invention, the edible part and the inedible part thereof may be derived from different kinds of edible plants, but it is preferred to contain the edible part and the inedible part derived from the same kind of edible plant, from the viewpoint of uniformity of flavor. Furthermore, it is preferred to contain the edible part and the inedible part derived from the same edible plant individual. That is, the use of a part or the whole of the edible part and a part or the whole of the inedible part derived from the same edible plant individual enables to utilize such an edible plant without waste and to eat the inedible part deliciously because the inedible part has a strong characteristic aroma inherent in the edible plant.

Examples of the inedible part of the edible plant include skin, seed, core, and draff of the above-mentioned various edible plants. Among them, since rich nutrients remain in the skin, seed, core, draff, and the like of, corn (e.g., sweetcorn), paprika, pumpkin, table beet, broccoli, spinach, carrot, kale, soybean (in particular, green soybean), pea, broad bean, tomato, rice, onion, cabbage, apple, grape, sugar cane, citrus fruits (e.g., Satsuma mandarin and yuzu), they can be suitably used in the present invention, without limitation. Specific examples of the inedible part of the edible plant include, but are not limited to, bract, pistil, and cob (core) of corn (e.g., sweetcorn); seed and stem end of paprika; seed and pith of pumpkin; skin of table beet; stem and leaf of broccoli; plant foot of spinach; root tip and petiole base of carrot; petiole base of kale; pod of soybean (green soybean); pod of pea; seed coat and pod of broad bean; stem end of tomato; rice hull of rice (unhulled rice); skin (protective leaf), bottom part, and head part of onion; core of cabbage; core of apple; fruit peel and seed of grape; draff of sugar cane; and skin, seed, and pith of citrus fruits (e.g., Satsuma mandarin and yuzu). Those not containing any components harmful to the human body in a degree that affect the human body are preferred.

The site and proportion of the inedible part in the edible plant used in the present invention can be naturally understood by those skilled in the art who handle the food or processed food products. For example, the "disposal part" and the "wastage rate" described in "the Standard Tables of Food Composition in Japan, 2015, (Seventh Revised Version)" can be referred to and considered as the site and the ratio of the inedible part, respectively. The following Table 1 shows examples of the edible plant and the "disposal part" and the "wastage rate" (that is, the site and ratio of the inedible part) described in the Standard Tables of Food Composition in Japan, 2015 (Seventh Revised Edition) with respect to the edible plant.

**[Table 1]**

| Edible plant | Insoluble dietary fiber localized site (site of inedible part) (Disposal part) | Ratio of insoluble dietary fiber localized site (inedible part) (Wastage rate) |
|---|---|---|
| Vegetables/green soybean/raw | Pod | 45% |
| Vegetables/(corns)/sweetcorn/immature seed, | Bract, pistil, and cob | 50% |
| Vegetables/(pumpkins)/Japanese pumpkin/fruit, raw | Pith, seed, and both ends | 9% |
| Vegetables/(green peppers)/red green pepper/fruit, raw (paprika) | Stem end, core, and seed | 10% |
| Vegetables/table beet/root, raw | Root tip, skin, and petiole | 10% |
| Vegetables/broccoli/inflorescence, raw | Stem and leaf | 50% |
| Vegetables/(tomatoes)/tomato/fruit, raw | Stem end | 3% |
| Vegetables/(cabbages)/cabbage/head-forming leaf, raw | Core | 15% |
| Vegetables/spinach/leaf, raw | Plant foot | 10% |
| Vegetables/kale/leaf, raw | Petiole base | 3% |
| Vegetables/(peas)/green pea/raw | Pod | 55% |
| Vegetables/broad bean/immature bean/raw | Seed coat, pod | 80% |
| Vegetables/(carrot)/root, with skin, raw | Root tip and petiole base | 3% |

### [Protein]

The solid composition of the present invention contains protein usually in an amount of 3 mass% or more, and from the viewpoint of imparting a texture, preferably in an amount of 4 mass% or more in terms of dry mass. The protein can be measured using a commonly used Kjeldahl method and calculated by multiplying the nitrogen-to-protein conversion factor, assuming that all nitrogen is derived from protein. Details are in accordance with the Analytical Manual for the Standard Tables of Food Composition in Japan, 2015 (Seventh Revised Edition). The upper limit of the protein content is preferably 60 mass% or less, and further preferably 50 mass% or less in terms of dry mass, from the viewpoint of the taste.

### [Carbohydrate]

In the solid composition of the present invention, the carbohydrate content is preferably a certain proportion or less, from the viewpoint of improving the crispiness. As a method for containing a carbohydrate, the carbohydrate may be derived from a raw material such as a foodstuff, or one or more carbohydrates may be separately added to the solid composition. In the case where the carbohydrate is added to the solid composition, examples of the kind of carbohydrate include, but are not limited to, saccharides (glucose, sucrose, fructose, glucofructose syrup, and fructoglucose syrup), sugar alcohols (xylitol, erythritol, and maltitol), starches, and starch degradation products. The carbohydrate content in the solid composition of the present invention is preferably less than 40 mass% as a total content in terms of monosaccharides in the whole solid composition because the crispiness is likely to be sensed. Above all, the total content is preferably less than 35 mass%, further preferably less than 30 mass%, and especially most preferably less than 25%. The lower limit is not particularly limited, but is 1 mass% or more.

Examples of the kind of carbohydrate also include foodstuffs containing carbohydrates such as juice (including fruit juice) derived from plants containing these saccharides and sap, purified products thereof, or concentrated products thereof. Among them, the content of the foodstuff which contains the carbohydrate in a state dissolved in water (e.g., date fruit juice) is preferably less than 30 mass%, further preferably less than 25 mass%, further preferably less than 20 mass%, and further preferably less than 15 mass% because the crispiness is likely to be lost.

### [Insoluble dietary fiber]

The solid composition of the present invention contains 3 mass% or more of the insoluble dietary fiber in terms of dry mass. It is further preferably 6 mass% or more, further preferably 7 mass% or more, further preferably 8 mass% or more, and further preferably 10 mass% or more, from the viewpoint of high intake of the insoluble dietary fiber. As an aspect thereof, it is particularly preferred that the amount of insoluble dietary fiber is homogeneously distributed in the solid composition. That is, the dried foodstuff from which the insoluble dietary fiber is derived may be crushed in advance, but in the case where the dried foodstuff is used without shredding, the insoluble dietary fiber exerts its effects only locally in the solid composition; and therefore, it is preferred that the insoluble dietary fiber be micronized and homogenized in the solid composition such that 50 mass% or more of the insoluble dietary fiber flows into a 4 mesh-pass fraction in a state of a 5 mass% aqueous solution of the dried foodstuff. As the method for measuring the insoluble dietary fiber, a general modified Prosky method is used. Details are in accordance with the Analytical Manual for the Standard Tables of Food Composition in Japan, 2015 (Seventh Revised Edition). The upper limit of the content of the insoluble dietary fiber is preferably 70 mass% or less, more preferably 60 mass% or less, more preferably 55 mass% or less, and more preferably 50 mass% or less in terms of dry mass, from the viewpoint of the taste.

The means for the crushing of the dried foodstuff is not particularly limited, and may be performed at any temperature and pressure during treatment. Examples of the apparatus for such crushing include equipment, such as a blender, a mixer, a mill, a kneader, a grinder, a crusher, and a disintegrator, and any of these may be used and either dry crushing or wet crushing may be used. In the case of wet crushing, an undried micronized edible plant may be dried and used as a raw material, or a powdered foodstuff may be obtained by preparing a solid composition using the undried micronized edible plant as a raw material and then subjecting this to drying. Examples of these crushing apparatuses include a medium stirring mill such as a dry bead mill, a wet bead mill, and a ball mill (a rolling type, a vibration type, etc.), a jet mill, a high-speed rotary impact type mill (e.g., pin mill), a roll mill, or a hammer mill.

### [Moisture content on wet basis]

In the solid composition of the present invention, the moisture content on wet basis is usually 11 mass% or less, preferably 10.5 mass% or less, and more preferably 10 mass% or less. This enables to modulate the solid composition to a dried state. The source of the moisture content on wet basis in the solid composition may be derived from various components in the solid composition, or may be further added as water. In the present invention, the moisture content on wet basis of the solid or dough composition refers to the total amount of the moisture amount derived from various components in the solid or dough composition and the moisture amount separately added, and can be measured by a normal pressure heat drying method in accordance with the Analytical Manual for the Standard Tables of Food Composition in Japan, 2015 (Seventh Revised Edition). The proportion of the evaporated moisture mass to the mass before drying is measured using, for example, a commonly used infrared moisture analyzer (e.g., the infrared moisture analyzer FD660 manufactured by Kett Electric Laboratory) at a drying temperature of 105°C (WET mode). The lower limit of the moisture content on wet basis is preferably 0 mass% or more, more preferably 0.5 mass% or more, and more preferably 1 mass% or more, from the viewpoint of easy ingestion.

### [Drying rate (105°C, 5 minutes)]

The solid composition of the present invention has a drying rate (105°C, 5 minutes) of 0.02 g/s·m² or more. In the solid composition of the present invention, after water addition treatment is performed to the solid composition containing the powder of the edible part and the insoluble dietary fiber localized site (e.g., pulverized seed coat part of dried pulses, furthermore, the inedible part) of the dried foodstuff (dried vegetables, dried grains, dried pulses, or dried fruits), a predetermined drying treatment is performed again, resulting in a solid composition having a certain drying rate under a low moisture content on wet basis owing to the action of unknown attributes due to the combination between the protein contained in the edible part in a large amount and the insoluble dietary fiber contained in the insoluble dietary fiber localized site in a large amount, thereby having flavor characteristics of good flavor release. Therefore, in a solid composition containing merely a dried foodstuff, the drying rate is considered to be lower than the definition of the present invention.

The drying rate refers to the mass of water evaporated per unit time and unit surface area, and the drying rate of the present invention is calculated from the difference between the weights before and after drying when the solid or dough composition is shredded in a mortar, and then uniformly mixed and evenly laminated in a certain area so as to have a thickness of 5 mm, followed by being subjected to heat treatment at 105°C for 5 minutes by the loss on drying method using a heat drying and mass measurement method. Specifically, the measurement is performed by pre-heating a sample plate having a radius of 5 cm using an infrared moisture analyzer (e.g., the infrared moisture analyzer FD660, manufactured by Kett Electric Laboratory) which can be measured by the loss on drying method using a heat drying and mass measurement method, and then evenly laminating the uniformly mixed solid or dough composition so as to have a thickness of 5 mm, and followed by subjecting the composition to drying treatment under normal pressure at 105°C for 5 minutes. For example, when 0.1 g of the moisture is evaporated in 5 minutes from the solid or dough composition arranged in a circle on a sample plate having a radius of 5 cm, the drying rate (105°C, 5 minutes) can be calculated from the mass of water evaporated per unit time (5 minutes × 60 seconds = 300[s]) and unit surface area (0.05 m × 0.05 m × 3.14 = 0.00785 [m²]) (0.1 g) to be 0.042 g/s·m².

The upper limit of the drying rate (105°C, 5 minutes) is not particularly limited, but may usually be 0.55 g/s·m² or less, and is further preferably 0.50 g/s·m² or less, further preferably 0.45 g/s·m² or less, above all preferably 0.40 g/s·m² or less, further preferably 0.35 g/s·m² or less, further preferably 0.30 g/s·m² or less, further preferably 0.25 g/s·m² or less, further preferably 0.20 g/s·m² or less, further preferably 0.15 g/s·m² or less, and further preferably 0.10 g/s·m² or less. The lower limit of the drying rate (105°C, 5 minutes) is not particularly limited, but may preferably be 0.03 g/s·m² or more, and more preferably 0.04 g/s·m² or more.

### [Particle size (50% integrated diameter, maximum particle size)]

For the sample in the measurement of the particle size (e.g., the 50% integrated diameter after disturbance and the maximum particle size before disturbance) of the particles in the aqueous dispersion of the solid composition or the dough composition of the present invention, a suspension (2 mass% aqueous dispersion of the composition) obtained by immersing 1 g of the solid composition sample or the dough composition in 50 g of distilled water at about 80°C, allowing to stand still for about 5 minutes, and thereafter, vigorously stirring with a spatula, suspending in hot water, and passing through a 7.5 mesh sieve having an opening of 2.36 mm and a wire diameter of 1.0 mm according to the new JIS is used, unless otherwise specified.

In the solid composition of the present invention, the 50% integrated diameter of the particle size in the aqueous dispersion of the solid or dough composition after disturbance, i.e., the conditions after ultrasonication, of the 2 mass% aqueous dispersion of the solid or dough composition described above is more than 5 µm and 600 µm or less. This can improve the solid composition to have a not too hard and crispy texture even in a dry state. Furthermore, the 50% integrated diameter of the 2 mass% aqueous dispersion of the solid or dough composition of the present invention after ultrasonication is preferably 8 µm or more, further preferably 10 µm or more, further preferably 15 µm or more, and further preferably 20 µm or more. The upper limit is preferably 500 µm or less, further preferably 400 µm or less, further preferably 300 µm or less, further preferably 250 µm or less, further preferably 200 µm or less, further preferably 150 µm or less, further preferably 100 µm or less, and further preferably 75 µm or less. The 50% integrated diameter is defined as the particle size at which the ratio between the proportion of the cumulative value of the particle frequency in % on the large side and the proportion of the cumulative value of the particle frequency in % on the small side is 50:50 when the particle size distribution of the solid or dough composition is divided into two from a certain particle size. For the maximum particle size, the particle size of the channel having the largest particle size can be determined as the maximum particle size among the channels whose % particle frequencies are recognized, from the results obtained by measuring the % particle frequency for each of the 132 channels in Table 2. The 50% integrated diameter after ultrasonication and the maximum particle size in a non-ultrasonicated state can be measured using, for example, a laser diffraction particle size distribution analyzer described below. The term "particle size" herein refers to that measured on a volume basis unless otherwise specified.

The conditions for measuring the 50% integrated diameter after disturbance, i.e., the conditions after ultrasonication, of the 2 mass% aqueous solution of the solid or dough composition of the present invention are as follows. First, the solvent used in the measurement is the distilled water which hardly affects the structure of the sample in the measurement of the solid or dough composition described below. The laser diffraction particle size distribution analyzer used for the measurement is a laser diffraction particle size distribution analyzer having a measurement range of at least from 0.02 µm to 2,000 µm by a laser diffraction scattering method. For example, Microtrac MT3300 EX2 system of MicrotracBEL Corporation is used, and as the measurement application software, for example, DMSII (Data Management System version 2, MicrotracBEL Corporation) can be used. When the measurement apparatus and the software above are used, the measurement may be performed by pressing down the washing button of the software to implement washing, pressing down the Set zero button of the software to implement zero adjustment, and directly charging a sample by sample loading until the concentration of the sample falls within an appropriate range. When a sample after disturbance, i.e., a sample after ultrasonication is subjected to the measurement, a previously ultrasonicated sample may be put, or a sample may be put and then ultrasonicated using the above-mentioned measurement apparatus, followed by the measurement. In the latter case, a sample not subjected to ultrasonication is put, the concentration is adjusted within an appropriate range by sample loading, and the ultrasonication button of the software is then pressed down to perform ultrasonication. Subsequently, defoaming is performed three times, and then sample loading is performed again. Immediately after verification that the concentration is still within the appropriate range, laser diffraction is performed at a flow rate of 60% for a measurement time of 10 seconds, and the result can be used as the measured value. In the present invention, the "ultrasonication" is a treatment of applying ultrasonic waves having a frequency of 40 kHz to a measurement sample at an output of 40 W for 3 minutes, unless otherwise specified. The parameters at the time of measurement are, for example, distribution display: volume, particle refractive index: 1.60, solvent refractive index: 1.333, upper limit of measurement (µm) = 2,000.00 µm, and lower limit of measurement (µm) = 0.021 µm.

Regarding the maximum size of the particle in the aqueous dispersion of the solid or dough composition of the present invention in a non-ultrasonicated state, the particle size distribution of the sample for each measurement channel is measured by not performing the disturbance, i.e., in a non-ultrasonicated state, to the 2 mass% aqueous dispersion of the solid or dough composition, under the same measurement conditions as the aforementioned 50% integrated diameter. Specifically, the particle size for each measurement channel described in Table 2 described below is used as a standard and measured, and particle frequency in % of each channel is determined by measuring the frequency of particles that are not larger than the particle size specified for each of the channels and larger than the particle size (in the channel largest in the measurement range, measurement lower limit of particle size) specified for the channel of a larger number by one for each channel, and using the total frequency of all channels within the measurement range as the denominator, and then, the particle size of the channel having the largest particle size is measured as the maximum particle size from the results obtained. When the food powders constituting the solid or dough composition of the present invention are sufficiently firmly bound together, the maximum particle size in a non-ultrasonicated state becomes larger than a certain particle size and the preferred flavor inherent in the edible plant is retained in the process of manufacturing the solid or dough composition owing to the bound foodstuff powders, and thereby the flavor release is improved. Therefore, the maximum particle size in a non-ultrasonicated state is preferably 300 µm or more, more preferably 350 µm or more, further preferably 400 µm or more, further preferably 450 µm or more, further preferably 500 µm or more, and further preferably 600 µm or more.

In the determination of the 50% integrated diameter of the particles in the aqueous dispersion of the solid or dough composition after ultrasonication of the 2 mass% aqueous dispersion of the solid or dough composition in the present invention, it is determined by measuring the particle size distribution at each channel (CH) and using the particle size of the measurement channel shown in Table 2 described below as the standard. Specifically, the particle frequency in % of each channel (which is also referred to as "particle frequency in % for XX channel") can be determined by measuring the frequency of particles that are not larger than the particle size specified for each of the channels shown in Table 2 below and larger than the particle size (in the channel largest in the measurement range, measurement lower limit of particle size) specified for the channel of a larger number by one for each channel shown in Table 2 and using the total frequency of all channels within the measurement range as the denominator. For example, the particle frequency in % of channel 1 represents the frequency in % of particles having sizes of 2,000.00 µm or less and higher than 1,826.00 µm.

**[Table 2]**

| Channel | Particle size (µm) | Channel | Particle size (µm) | Channel | Particle size (µm) | Channel | Particle size (µm) |
|---|---|---|---|---|---|---|---|
| 1 | 2000.000 | 37 | 88.000 | 73 | 3.889 | 109 | 0.172 |
| 2 | 1826.000 | 38 | 80.700 | 74 | 3.566 | 110 | 0.158 |
| 3 | 1674.000 | 39 | 74.000 | 75 | 3.270 | 111 | 0.145 |
| 4 | 1535.000 | 40 | 67.860 | 76 | 2.999 | 112 | 0.133 |
| 5 | 1408.000 | 41 | 62.230 | 77 | 2.750 | 113 | 0.122 |
| 6 | 1291.000 | 42 | 57.060 | 78 | 2.522 | 114 | 0.111 |
| 7 | 1184.000 | 43 | 52.330 | 79 | 2.312 | 115 | 0.102 |
| 8 | 1086.000 | 44 | 47.980 | 80 | 2.121 | 116 | 0.094 |
| 9 | 995.600 | 45 | 44.000 | 81 | 1.945 | 117 | 0.086 |
| 10 | 913.000 | 46 | 40.350 | 82 | 1.783 | 118 | 0.079 |
| 11 | 837.200 | 47 | 37.000 | 83 | 1.635 | 119 | 0.072 |
| 12 | 767.700 | 48 | 33.930 | 84 | 1.499 | 120 | 0.066 |
| 13 | 704.000 | 49 | 31.110 | 85 | 1.375 | 121 | 0.061 |
| 14 | 645.600 | 50 | 28.530 | 86 | 1.261 | 122 | 0.056 |
| 15 | 592.000 | 51 | 26.160 | 87 | 1.156 | 123 | 0.051 |
| 16 | 542.900 | 52 | 23.990 | 88 | 1.060 | 124 | 0.047 |
| 17 | 497.800 | 53 | 22.000 | 89 | 0.972 | 125 | 0.043 |
| 18 | 456.500 | 54 | 20.170 | 90 | 0.892 | 126 | 0.039 |
| 19 | 418.600 | 55 | 18.500 | 91 | 0.818 | 127 | 0.036 |
| 20 | 383.900 | 56 | 16.960 | 92 | 0.750 | 128 | 0.033 |
| 21 | 352.000 | 57 | 15.560 | 93 | 0.688 | 129 | 0.030 |
| 22 | 322.800 | 58 | 14.270 | 94 | 0.630 | 130 | 0.028 |
| 23 | 296.000 | 59 | 13.080 | 95 | 0.578 | 131 | 0.026 |
| 24 | 271.400 | 60 | 12.000 | 96 | 0.530 | 132 | 0.023 |
| 25 | 248.900 | 61 | 11.000 | 97 | 0.486 | | |
| 26 | 228.200 | 62 | 10.090 | 98 | 0.446 | | |
| 27 | 209.300 | 63 | 9.250 | 99 | 0.409 | | |
| 28 | 191.900 | 64 | 8.482 | 100 | 0.375 | | |
| 29 | 176.000 | 65 | 7.778 | 101 | 0.344 | | |
| 30 | 161.400 | 66 | 7.133 | 102 | 0.315 | | |
| 31 | 148.000 | 67 | 6.541 | 103 | 0.289 | | |
| 32 | 135.700 | 68 | 5.998 | 104 | 0.265 | | |
| 33 | 124.500 | 69 | 5.500 | 105 | 0.243 | | |
| 34 | 114.100 | 70 | 5.044 | 106 | 0.223 | | |
| 35 | 104.700 | 71 | 4.625 | 107 | 0.204 | | |
| 36 | 95.960 | 72 | 4.241 | 108 | 0.187 | | |

### [Minimum differential value of stress value at each strain%]

The differential value in the present invention refers to the proportion obtained by dividing the stress value difference (kN/m²) applied to a descending plate-like plunger by the strain ratio difference (%) in the stress measurement using a texture analyzer. Therefore, the state where the differential value is negative represents a tendency that the stress applied to the plunger (temporarily) decreases along with the descending of the plunger. This feature is recognized in a solid composition having a discontinuous structure from near the surface of the solid composition to the inside of the solid composition.

That is, the solid composition having an average value of the minimum differential value at a strain ratio of 30% or less being less than -900 kN/m²% is preferred because it is a solid composition in which near the surface of the solid composition and the inside of the solid composition have a discontinuous strength, and has a crispy texture, and above all, the average value is preferably less than -800 kN/m²%, further preferably less than -700 kN/m²%, further preferably less than -600 kN/m²%, further preferably less than -500 kN/m²%, further preferably less than -400 kN/m²%, further preferably less than -300 kN/m²%, and particularly preferably less than - 200 kN/m²%. Furthermore, the region in which the minimum differential value at a strain ratio of 30% or less is less than the defined numerical value (specifically less than -900 kN/m²%, more preferably less than -800 kN/m²%, further preferably less than -700 kN/m²%, further preferably less than -600 kN/m²%, further preferably less than -500 kN/m²%, further preferably less than -400 kN/m²%, above all less than -300 kN/m²%, and particularly preferably less than -200 kN/m²%) preferably occupies 20% or more based on the total surface of the solid composition. Above all, the region preferably occupies 30% or more, further preferably 40% or more, further preferably 50% or more, further preferably 60% or more, further preferably 70% or more, further preferably 80% or more, further preferably 90% or more, and particularly preferably 100% or more.

The minimum differential value at a strain ratio of 30% or less refers to the minimum differential value obtained by continuously measuring the differential value while entering a plunger vertically to a distance of 30% (strain ratio 30%) from the upper part of the solid composition toward the lower part (inside) of the solid composition, provided that the vertically lower part of the surface (the bottom surface) of the solid composition in the measurement is 100%, and the top surface (top surface) thereof is 0%.

To measure the proportion occupied by the region on the surface of the solid composition, the surface of the solid composition is partitioned for each appropriate size (any size may be used as long as the composition is not disintegrated, but more specifically, for 1 cm²), and each partition is measured, and then each measured value is averaged to obtain an average value. Also, in a solid composition having a homogeneous surface composition, the measured site representative of the surface structure thereof may be used as the differential value of the whole region.

The surface of the solid composition in the present invention represents a region where the solid composition directly contacts with the outside air, and includes the vertically lower surface of the solid composition.

In the present invention, the method for measuring the minimum differential value at a strain ratio of 30% or less and a region where the minimum differential value at a strain ratio of 30% or less is less than -900 kN/m²% is as follows:
[Method 1] The differential value (kN/m²%) at each strain ratio (%) is determined by pressing the surface of the solid composition having a material temperature of 20°C vertically to a strain ratio of 30% at a descent rate of 1 mm/second by a plate-like plunger having a cross-sectional area of 5 mm² (1 mm in length × 5 mm in width) using a texture analyzer (RE2-3305C, manufactured by Yamaden Co., Ltd.), continuously measuring the stress (kN/m²) at an interval of 0.1 seconds, followed by dividing the stress value difference (kN/m²) between the strain ratios by the strain ratio difference (%). The differential value is calculated by measuring the stress value at an interval of 0.1 seconds. For example, in the case where the measured value (strain ratio Xi%, stress P1 (kN/m²)) at an arbitrary measurement time T1 second and the measured value (strain ratio Xii%, stress P2 (kN/m²)) at T1 + 0.1 seconds, the differential value at the strain ratio Xi% (measurement time T1 second) can be calculated by dividing the stress difference P2 - P1 (kN/m²) by the strain ratio difference Xii - Xi%.

### [Fat/oil]

The solid composition of the present invention may contain one or more fats/oils. When it contains two or more fats/oils, the combination of two or more fats/oils or the ratio among them is arbitrary.

Examples of the kind of fat/oil include edible fats/oils, and various fatty acids and foods using the edible fats/oils as a raw material, but edible fats/oils are preferably used. The edible fat/oil may be the fat/oil contained in the foodstuff, but another edible fat/oil different from the foodstuff is preferably added because it is more compatible with the foodstuff. When another edible fat/oil different from the foodstuff is added, the amount of another edible fat/oil different from such a foodstuff may usually be less than 60 mass%, but is further preferably less than 50 mass%, further preferably less than 40 mass%, further preferably less than 35 mass%, further preferably less than 30 mass%, further preferably less than 25 mass%, further preferably less than 20 mass%, further preferably less than 15 mass%, and further preferably less than 10 mass% with respect to the total fat/oil content of the solid composition.

The solid composition of the present invention may contain a solid fat/oil, and the lower limit thereof is preferably 30 mass% or more, further preferably 50 mass% or more, further preferably 70 mass% or more, further preferably 90 mass% or more, and further preferably 100 mass% based on the total fat/oil content.

This is preferred because the solid composition can have a not too hard and crispy texture even in a dry state.

Specific examples of the edible fat/oil include sesame oil, rape oil, high oleic rapeseed oil, soybean oil, palm oil, cotton oil, corn oil, sunflower oil, high oleic sunflower oil, safflower oil, olive oil, flax oil, rice oil, camellia oil, perilla oil, flavor oil, coconut oil, grapeseed oil, peanut oil, almond oil, avocado oil, cocoa butter, salad oil, canola oil, or MCT (medium chain fatty acid triglyceride), diglyceride, hardened oil, transesterification oil, and animal fats/oils such as milk fat and beef tallow. In particular, liquid edible fats/oils such as sesame oil, olive oil, rape oil, soybean oil, sunflower oil, rice oil, coconut oil, and palm oil are preferred, and olive oil, coconut oil, and rape oil are more preferrable, from the viewpoint of flavor.

Specific examples of the food using various fatty acids as a raw material include butter, margarine, shortening, raw cream, and soymilk cream (for example, "Ko-cream" (R) manufactured by Fuji Oil Co., Ltd.).

In the present invention, the method for measuring the total fat/oil content is in accordance with the method described in the Food Labelling Standards (Cabinet Office Ordinance, No. 10, 2015) and Analytical Manual for the Standard Tables of Food Composition in Japan, 2015 (Seventh Revised Edition) and uses a chloroform-methanol mixture extraction method.

### [Other foodstuffs]

The solid composition of the present invention may contain other foodstuffs in addition to the foodstuff containing the insoluble dietary fiber as long as the effect of the present invention is not prevented. Specifically, other foodstuffs refer to foodstuffs or ingredients having a particle size larger than 2,000 µm (2 mm) that are not to be the measurement object of a laser diffraction particle size distribution measurement. Examples of such other foodstuff include puff of grains, dried nuts, and dried fruits, and any of them may be used. These foodstuffs may be used alone or in combination of two or more.

In this case, when measuring the 50% integrated diameter after ultrasonication, the measurement is performed after eliminating those having a particle size of 2,000.00 µm or more that is the upper limit of the measurement from these ingredients.

These foodstuffs may be used as they are, or may be used after various treatments (e.g., drying, heating, harshness removal, peeling, seed removal, ripening, salting, and fruit peel processing).

The solid composition of the present invention may contain one or more other components in addition to the aforementioned various components. Examples of other components include seasonings, food additives, nutrient components, and binders.

Examples of seasonings and food additives include soy sauce, miso paste, alcohols, salts, saccharides (e.g., glucose, sucrose, fructose, glucofructose syrup, and fructoglucose syrup), sugar alcohols (e.g., xylitol, erythritol, and maltitol), artificial sweeteners (e.g., sucralose, aspartame, saccharin, and acesulfame K), minerals (e.g., zinc, potassium, calcium, chrome, selenium, iron, copper, sodium, magnesium, manganese, iodine, and phosphorus), fragrances, spices, pH adjusters (e.g., sodium hydroxide, potassium hydrate, lactic acid, citric acid, tartaric acid, malic acid, and acetic acid), dextrin, cyclodextrin, antioxidants (e.g., tea extract, green coffee bean extract, chlorogenic acid, spice extract, coffeic acid, rosemary extract, rutin, quercetin, bayberry extract, and sesame extract), emulsifiers (e.g., glycerin fatty acid ester, saponin, sucrose fatty acid ester, and lecithin), colorants, and thickening stabilizers.

Examples of nutrient components include vitamins (e.g., niacin, pantothenic acid, biotin, vitamin A, vitamin B1, vitamin B2, vitamin B6, vitamin B12, vitamin C, vitamin D, vitamin E, vitamin K, and folic acid); animal proteins derived from livestock meat, milk, and egg; vegetable proteins derived from soybean and grains; lipids (n-3 fatty acids such as α-linolenic acid, EPA, and DHA, n-6 fatty acids such as linoleic acid and arachidonic acid); and functional components such as dietary fiber and polyphenol.

However, the solid composition of the present invention preferably contains no egg and/or no milk, more preferably contains no gluten, and further contains no animal foodstuff, from the viewpoint of the effects on the preferred flavor inherent in the edible plant and allergy risk.

The present invention encompasses a method for manufacturing a solid composition containing a powder of an edible part and/or an insoluble dietary fiber localized site of one or more selected from the group consisting of dried vegetables, dried grains, dried pulses, and dried fruits, the method comprising the following steps (i) and (ii):
(i) a step of adjusting a dough composition containing a powder of an edible part and/or an insoluble dietary fiber localized site of one or more selected from the group consisting of dried vegetables, dried grains, dried pulses, and dried fruits so that a content of the insoluble dietary fiber is 5 mass% or more, a 50% integrated diameter of particles in an aqueous dispersion of the dough composition after ultrasonication is more than 5 µm and 600 µm or less, and a moisture content on wet basis is 15 mass% or more; and
(ii) a step of subjecting the dough composition of (i) to heat treatment to reduce a moisture content on wet basis by 4 mass% or more for solidification.

The details of the steps (i) and (ii) are as mentioned above.

It is preferred to adjust the drying rate of the dough composition to 0.20 g/s·m² (105°C, 5 minutes) or more in the step (i) of the above manufacturing method. It is more preferred that, in the step (i), the dough composition contain the powder of the edible part and the insoluble dietary fiber localized site of one or more selected from the group consisting of dried vegetables, dried grains, dried pulses, and dried fruits (e.g., pulverized seed coat part of dried pulses, and furthermore, the inedible part) because the solid composition can have a good flavor release.

It is preferred to perform heating until the drying rate of the dough composition reaches less than 0.20 g/s·m² (105°C, 5 minutes) in the step (ii) of the manufacturing method. The heat treatment time in the step (ii) may usually be 10 minutes or more, and more preferably 20 minutes or more. The heat treatment temperature in the step (ii) may usually be 100°C or more, and more preferably 105°C or more. Furthermore, it is more preferred to comprise a step of heating at 200°C or more within 0.5 minutes or more and no more than 5 minutes, during the heat treatment step at 100°C or more in the step (ii). Furthermore, it is more preferred to perform heating until the drying rate of the dough composition reaches 0.02 g/s·m² (105°C, 5 minutes) or more in the step (ii) of the manufacturing method because the solid composition can have a good flavor release.

As described above in detail, the effect of the present invention is exerted by adjusting such that the following characteristics (1) to (5) can be satisfied, in the solid composition containing a powder of an edible part and/or an insoluble dietary fiber localized site of one or more selected from the group consisting of dried vegetables, dried grains, dried pulses, and dried fruits:
(1) the solid composition contains 3 mass% or more of protein;
(2) the solid composition contains 3 mass% or more of insoluble dietary fiber;
(3) the moisture content on wet basis is 11 mass% or less;
(4) the drying rate (105°C, 5 minutes) is 0.02 g/s·m² or more; and
(5) the 50% integrated diameter of particles in an aqueous dispersion of the solid composition after ultrasonication is more than 5 µm and 600 µm or less.

That is, a solid composition which is not too hard and excellent in edibility and to which a dry and good crispy texture and a preferred raw material-derived flavor are imparted (to which a preferred flavor inherent in the edible plant is imparted and in which the flavor release is improved) can be prepared by containing the powder of an edible part and/or an insoluble dietary fiber localized site of one or more selected from the group consisting of dried vegetables, dried grains, dried pulses, and dried fruits, containing a certain amount or more of protein and insoluble dietary fiber, and modulating the moisture content on wet basis and the drying rate within a certain range.

### Examples

The present invention will now be described in more detail with reference to Examples, but these Examples are illustrative only for the convenience of description, and the present invention is not limited to these Examples in any sense.

### [Preparation of solid composition]

The solid compositions of Comparative Examples 1 to 8 and Test Examples 1 to 25 were prepared using the materials shown in the following Table 3 and Table 4. Specifically, dried products of pumpkin, carrot, cabbage, and table beet (beetroot) which are one kind of vegetables, and orange which is one kind of fruits were subjected to drying treatment until the water activity values thereof reached at least 0.95 or less, and then pulverized. Corn which is one kind of grains was used in an undried raw state and formed into a paste with a mixer. Thereafter, the part generally used for eating or drinking (the edible part, the part other than the inedible part) were subjected to drying treatment until the water activity value reached at least 0.95 or less, and then pulverized. The insoluble dietary fiber localized site (the inedible part) was used in an undried paste state. For yellow pea and soybean which are one kind of pulses, among the part generally used for eating or drinking, each of the seed coat part (insoluble dietary fiber localized site) and the remaining parts other than the seed coat (the edible part) was subjected to drying treatment until the water activity value reached at least 0.95 or less, and then pulverized. The part generally used for eating or drinking (the part other than the inedible part) was used as the edible part of each foodstuff, while each of the seed and pith of pumpkin, stem end of carrot, core of cabbage, skin of table beet (beetroot), fruit peel of orange, core of corn, pod of soybean, and pod of yellow pea were dried, pulverized, and used as the insoluble dietary fiber localized site (the inedible part) of some foodstuffs. After materials such as concentrated date fruit juice (Brix75) and almond paste as the other foodstuffs, and rapeseed oil (liquid oil), cocoa butter (solid fat), and coconut oil (solid fat) as fats/oils were appropriately mixed with the obtained dried product or undried paste according to the compositions shown in Table 3 and Table 4, each mixture was formed to have 5 mm in thickness, 10 cm in length, and 3 cm in width, subjected to heat treatment under respective conditions shown in Table 4, and then allowed to cool to obtain a solid composition. The raw material blending proportion before processing represents the blending proportion for each raw material (mass%) when the solid composition after the heat treatment was determined as 100 mass%.

### [Measurement for content of components in each solid composition sample]

In each solid composition sample, the insoluble dietary fiber content was measured using the modified Prosky method, the protein content was measured using the Kjeldahl method-a method for nitrogen-to-protein conversion, the total fat/oil content was measured using the chloroform-methanol mixture extraction method, the moisture content on wet basis was measured using the normal pressure heat drying method, and the starch content was measured using a method in which soluble carbohydrates affecting to measured values (e.g., glucose, maltose, and maltodextrin) were removed according to the method of AOAC996.11 by 80% ethanol extraction treatment, in accordance with the Analytical Manual for the Standard Tables of Food Composition in Japan, 2015 (Seventh Revised Edition).

### [Calculation of foodstuff content of each solid composition sample]

The content of the inedible part of the edible plant, the content of the vegetable, grains, and fruits, and the content of the pulses in each solid composition sample were determined by subtracting the moisture content on wet basis measured for each of them from the blend ratio.

### [Measurement for drying rate (105°C, 5 minutes) of each solid or dough composition sample]

The drying rate (105°C, 5 minutes) for each solid or dough composition sample was measured by pre-heating a sample plate having a radius of 5 cm using an infrared moisture analyzer (the infrared moisture analyzer FD660 manufactured by Kett Electric Laboratory) which can be measured by the loss on drying method using a heat drying and mass measurement method, and then evenly laminating the uniformly mixed solid or dough composition to have a thickness of 5 mm, and followed by subjecting the composition to drying treatment under normal pressure at 105°C for 5 minutes.

### [Measurement for particle size in aqueous dispersion of each solid or dough composition]

The 2 mass% aqueous dispersion of the solid or dough composition obtained by immersing 1 g of each solid or dough composition sample in 50 g of distilled water at about 80°C, allowing to stand still for about 5 minutes, and thereafter, vigorously stirring with a spatula, suspending in hot water, and passing through a 7.5 mesh sieve having an opening of 2.36 mm and a wire diameter of 1.0 mm according to the new JIS was used as a sample for measuring the particle size distribution.

Microtrac MT3300 EX2 system of MicrotracBEL Corporation was used as the laser diffraction particle size distribution analyzer and the particle size distribution of each solid or dough composition sample was measured. DMSII (Data Management System version 2, MicrotracBEL Corporation) was used as the measurement application software. The distilled water was used as the solvent in the measurement, and the measurement was performed by pressing down the washing button of the measurement application software to implement washing, pressing down the set zero button of the software to implement zero adjustment, and directly charging the sample by sample loading until the concentration of the sample falls within an appropriate range.

The measurement of a sample to which no disturbance was applied, i.e., the sample in a non-ultrasonicated state, was performed by adjusting the sample concentration within an appropriate range by two times of sample loading after charging the sample, and immediately performing a laser diffraction measurement at a flow rate of 60% for a measurement time of 10 seconds, and the result obtained was used as the measured value. On the other hand, the measurement of a sample to which disturbance was applied, that is, the sample in a state where ultrasonication was performed (the 2 mass% aqueous dispersion of the solid or dough composition), was performed by adjusting the sample concentration within an appropriate range by sample loading after charging the sample, pressing down the ultrasonication button of the software to apply ultrasonic waves having a frequency of 40 kHz with an output of 40 W for 3 minutes. Subsequently, defoaming was performed three times, and then sample loading was performed again. Immediately after verification that the sample concentration was still within the appropriate range, the laser diffraction measurement was performed at a flow rate of 60% for a measurement time of 10 seconds, and the result obtained was used as the measured value. The measurement conditions used were; distribution display: volume, particle refractive index: 1.60, solvent refractive index: 1.333, upper limit of measurement (µm) = 2,000.00 µm, lower limit of measurement (µm) = 0.021 µm.

In the measurement of the particle size distribution for each measurement channel of the samples, the particle size for each measurement channel shown in the above-mentioned Table 2 was used as the standard. The particle frequency in % of each channel was determined by measuring the frequency of particles that are not larger than the particle size specified for each of the channels and larger than the particle size (in the channel largest in the measurement range, measurement lower limit of particle size) specified for the channel of a larger number by one for each channel, and using the total frequency of all channels within the measurement range as the denominator. Specifically, the particle frequency in % for each of the 132 channels below was measured. From the results obtained by the measurement, the particle size of the channel having the largest particle size was defined as the maximum particle size.

### [Sensory evaluation of solid composition sample]

The solid composition samples of Comparative Examples 1 to 8 and Test Examples 1 to 25 obtained in the above procedure were subjected to sensory evaluations by the following procedure.

Sensory tests to evaluate the quality were performed with respect to the solid composition sample of each Test Example and each Comparative Example by a total of ten trained sensory inspectors selected by the following procedures. In these sensory tests, each of the items: "flavor (strength of flavor release)", "texture (dried and crispy texture)", and "overall evaluation of flavor and texture" was evaluated on a scale up to 5 according to the following criteria.

In each of the evaluation items, all the inspectors evaluated standard samples in advance, and each score of the evaluation criteria was standardized. The sensory inspection was then performed with objectivity by 10 inspectors. The evaluation of each item was made by selecting a rating closest to the inspector's own evaluation on a five-grade scale of each item. The total result of the evaluation was calculated from the arithmetic mean values of the scores by 10 inspectors and rounded off after the decimal point.

### <Evaluation criterion 1: flavor (strength of flavor release)>

5: Preferred flavor release inherent in the edible plant is strong and excellent.
4: Preferred flavor release inherent in the edible plant is slightly strong and slightly excellent.
3: Preferred flavor release inherent in the edible plant is sensed and within an acceptable range.
2: Preferred flavor release inherent in the edible plant is not so much sensed and slightly poor.
1: Preferred flavor release inherent in the edible plant is not sensed and poor.

### <Evaluation criterion 2: texture (dried and crispy texture)>

5: Preferred crispy texture is excellent.
4: Preferred crispy texture is slightly excellent.
3: Preferred crispy texture is sensed and within an acceptable range.
2: Preferred crispy texture is weak and slightly poor.
1: Preferred crispy texture is not sensed and poor.

### <Evaluation criterion 3: Overall evaluation of flavor and texture>

5: Balance between flavor and texture is good and edibility is excellent.
4: Balance between flavor and texture is slightly good and edibility is slightly excellent.
3: Balance between flavor and texture is within an acceptable range at the time of eating.
2: Balance between flavor and texture is slightly poor and edibility is slightly poor.
1: Balance between flavor and texture is poor and edibility is poor.

The sensory inspectors were chosen from inspectors who were trained for the following discrimination tests A) to C) and showed particularly excellent results, had experience in product development and a wealth of knowledge about the quality of foods, such as taste and texture, and were capable of performing absolute evaluation on each sensory inspection item.
A) Taste quality discrimination test of correctly discriminating samples for five tastes (sweetness: taste of sugar, sourness: taste of tartaric acid, savoriness: taste of sodium glutamate, saltiness: taste of sodium chloride, and bitterness: taste of caffeine) from aqueous solutions produced so as to have a concentration close to the threshold of each component and two samples of distilled water, seven samples in total;
B) Concentration difference discrimination test of correctly discriminating concentration differences in five sodium chloride aqueous solutions and five acetic acid aqueous solutions having concentrations slightly different from each other; and
C) Triangle discrimination test of correctly discriminating a soy sauce of maker B from two soy sauces of maker A and the soy sauce of maker B, three samples in total.

### [Analysis and evaluation results of solid composition sample]

The following Table 3 and Table 4 show the component content such as the content of the insoluble dietary fiber component, physical properties such as the drying rate (105°C, 5 minutes) and the particle size, and the evaluation results of the sensory test of the solid composition samples of Comparative Examples 1 to 8 and Test Examples 1 to 25.

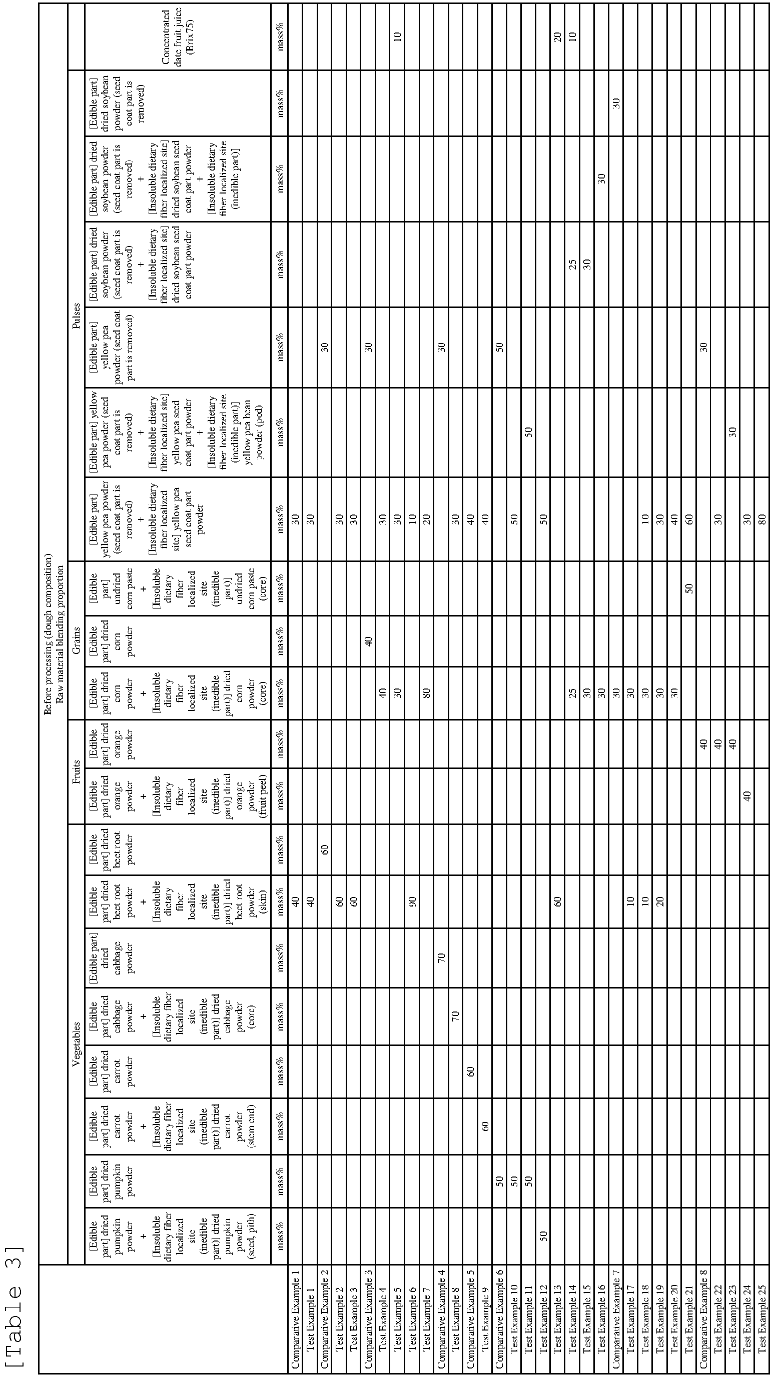

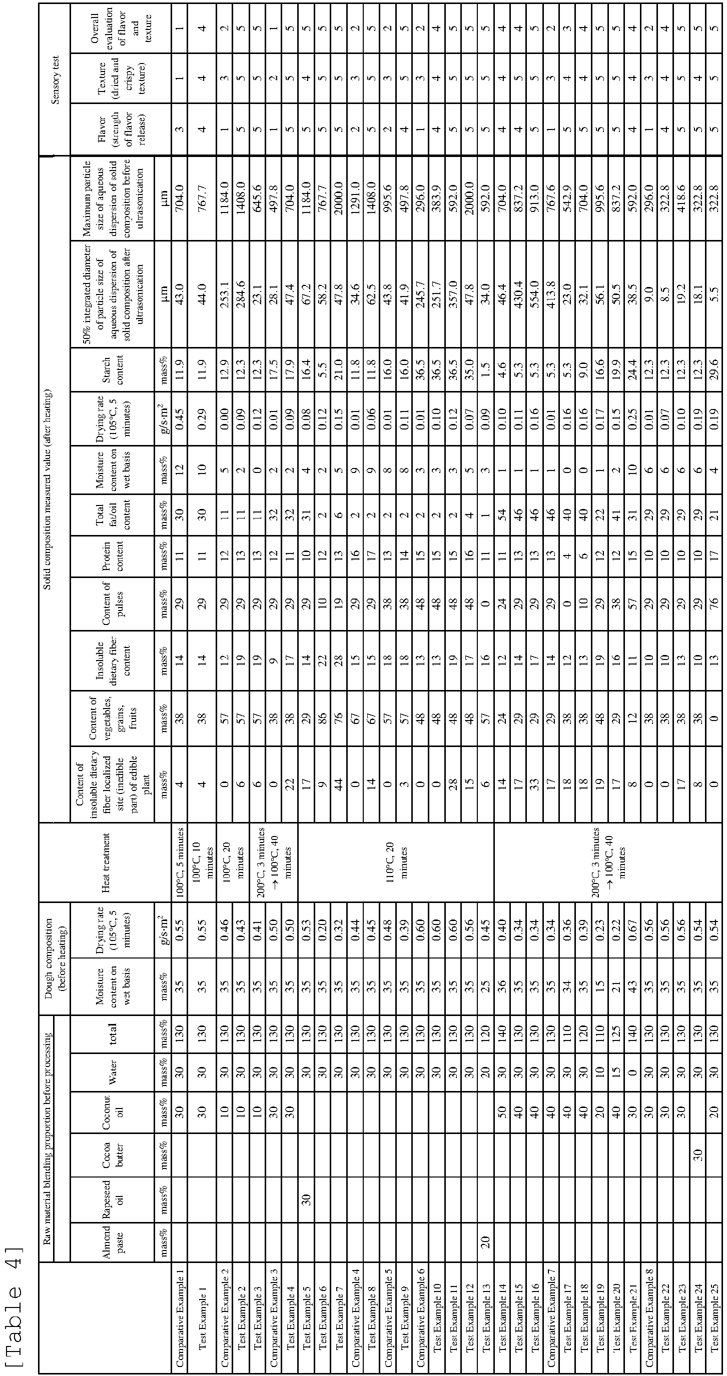

### [Industrial Applicability]

The solid composition containing insoluble dietary fibers of the present invention and the manufacturing method thereof can be conveniently and widely used in the field of foods and have extremely high utility.

## Claims

1. A solid composition comprising a powder of an edible part and/or an insoluble dietary fiber localized site of one or more selected from the group consisting of dried vegetables, dried grains, dried pulses, and dried fruits, wherein the solid composition satisfies the following characteristics (1) to (5):
(1) the solid composition contains 3 mass% or more of protein;
(2) the solid composition contains 3 mass% or more of insoluble dietary fiber;
(3) a moisture content on wet basis is 11 mass% or less;
(4) a drying rate (105°C, 5 minutes) is 0.02 g/s·m² or more; and
(5) a 50% integrated diameter of particles in an aqueous dispersion of the solid composition after ultrasonication is more than 5 µm and 600 µm or less.

2. The solid composition according to claim 1, comprising an edible part and an insoluble dietary fiber localized site of one or more selected from the group consisting of dried vegetables, dried grains, dried pulses, and dried fruits.

3. The solid composition according to claim 1 or 2, wherein the maximum particle size in the aqueous dispersion of the solid composition in a non-ultrasonicated state is 300 µm or more.

4. The solid composition according to any one of claims 1 to 3, comprising 5 mass% or more of the edible part and/or the insoluble dietary fiber localized site of the dried pulses.

5. The solid composition according to any one of claims 1 to 4, comprising a powder of a seed coat part of the dried pulses.

6. The solid composition according to any one of claims 1 to 5, further having a total fat/oil content of less than 60 mass%.

7. The solid composition according to any one of claims 1 to 6, wherein a content of an edible part and/or an insoluble dietary fiber localized site of one or more selected from the group consisting of dried vegetables, dried grains, and dried fruits is 10 mass% or more in terms of dry mass.

8. The solid composition according to any one of claims 1 to 7, further comprising a solid fat/oil.

9. The solid composition according to any one of claims 1 to 8, comprising 1 mass% or more and 90 mass% or less of the powder of insoluble dietary fiber localized site of one or more selected from the group consisting of dried vegetables, dried grains, dried pulses, and dried fruits in terms of dry mass, with respect to the total solid composition.

10. The solid composition according to any one of claims 1 to 9, wherein the edible part and the insoluble dietary fiber localized site of one or more selected from the group consisting of dried vegetables, dried grains, dried pulses, and dried fruits are derived from the same kind of plants.

11. The solid composition according to any one of claims 1 to 10, wherein the edible part and the insoluble dietary fiber localized site of one or more selected from the group consisting of dried vegetables, dried grains, dried pulses, and dried fruits are derived from the same individual.

12. The solid composition according to any one of claims 1 to 11, wherein the dried vegetables are one or more selected from the group consisting of pumpkin, carrot, cabbage, and table beet.

13. The solid composition according to any one of claims 1 to 11, comprising no gluten.

14. The solid composition according to any one of claims 1 to 11, wherein the dried grains are corn.

15. The solid composition according to any one of claims 1 to 11, wherein the dried fruits are citrus fruits.

16. The solid composition according to any one of claims 1 to 15, wherein the solid composition is for human ingestion.

17. The solid composition according to any one of claims 1 to 16, comprising no animal foodstuff.

18. The solid composition according to any one of claims 1 to 17, wherein the solid composition is a baked confection.

19. A method for manufacturing a solid composition comprising a powder of an edible part and/or an insoluble dietary fiber localized site of one or more selected from the group consisting of dried vegetables, dried grains, dried pulses, and dried fruits, the method comprising the following steps (i) and (ii):
(i) a step of adjusting a dough composition comprising a powder of an edible part and/or an insoluble dietary fiber localized site of one or more selected from the group consisting of dried vegetables, dried grains, dried pulses, and dried fruits so that a content of the insoluble dietary fiber is 5 mass% or more, a 50% integrated diameter of particles in an aqueous dispersion of the dough composition after ultrasonication is more than 5 µm and 600 µm or less, and a moisture content on wet basis is 15 mass% or more; and
(ii) a step of subjecting the dough composition of (i) to heat treatment to reduce a moisture content on wet basis by 4 mass% or more for solidification.

20. The method for manufacturing a solid composition according to claim 19, wherein, in the step (i), a drying rate of the dough composition is adjusted to 0.20 g/s·m² (105°C, 5 minutes) or more.

21. The method for manufacturing a solid composition according to claim 19 or 20, wherein, in the step (i), the dough composition comprises the edible part and the insoluble dietary fiber localized site of one or more selected from the group consisting of dried vegetables, dried grains, dried pulses, and dried fruits.

22. The method for manufacturing a solid composition according to any one of claims 19 to 21, wherein, in the step (i), the dough composition comprises a powder of a seed coat part of dried pulses.

23. The method for manufacturing a solid composition according to any one of claims 19 to 22, wherein, in the step (ii), heating is performed until the drying rate reaches less than 0.20 g/s·m² (105°C, 5 minutes).

24. The method for manufacturing a solid composition according to any one of claims 19 to 23, wherein, in the step (ii), heating is performed until the drying rate reaches 0.02 g/s·m² (105°C, 5 minutes) or more.
